# EUROPÄISCHE PATENTSCHRIFT

(11) **EP 0 813 038 B1**
(45) Veröffentlichungstag und Bekanntmachung des Hinweises auf die Patenterteilung: **29.08.2001**
(21) Anmeldenummer: 97109596.3
(22) Anmeldetag: 12.06.1997
(51) Int. Cl.: F41A 23/18, B60R 7/14, A47B 81/00

(54) **Halteteil, Haltevorrichtung und Bausatz für den Zusammenbau einer Haltevorrichtung für ein Gewehr**
Holder, holding device and kit for assembling a holding device for a rifle
Porteur, dispositif pour maintenir et ensemble pour l'assemblage d'un dispositif pour maintenir un fusil

(30) Priorität: 12.06.1996 DE 19623516
(43) Veröffentlichungstag der Anmeldung: 17.12.1997
(73) Patentinhaber: HECKLER & KOCH GMBH, D-78727 Oberndorf (DE)
(72) Erfinder: Fluhr, Norbert, 78727 Oberndorf (DE)
(74) Vertreter: Turi, Michael, Dipl.-Phys.

(56) Entgegenhaltungen:
- EP-A- 0 036 478
- DE-C- 498 714
- US-A- 1 837 939
- US-A- 2 158 623
- US-A- 2 668 645
- US-A- 2 919 058
- US-A- 3 802 612
- US-A- 4 057 180

## Beschreibung

Die vorliegende Erfindung betrifft ein Halteteil für ein Gewehr, eine Haltevorrichtung für ein Gewehr zur Befestigung des Gewehrs an einem Wandabschnitt, insbesondere im Inneren eines Fahrzeuges, sowie einen Bausatz zum Zusammenbau einer derartigen Gewehr-Haltevorrichtung.

Vor allem der Transport von Gewehren in Kraftfahrzeugen bringt das Problem mit sich, daß das oder die Gewehre einerseits möglichst platzsparend und sicher fixiert sein müssen und andererseits, z.B. im Innenraum von Militärfahrzeugen, im Bedarfsfall schnell aus der Halterung entnommen werden können. Aufgrund der starken Erschütterungen, dem ein Kraftfahrzeug im Gelände ausgesetzt ist, werden bekannte Haltevorrichtungen für Gewehre diesen Anforderungen nicht gerecht.

Aus der US 1 837 939 ist eine Gewehr-Haltevorrichtung der eingangs genannten Art bekannt, welcher außen an der Karrosserie eines Fahrzeuges befestigt ist. Der bekannte Vorrichtung kann jedoch zum einen das Gewehr nur in einer bestimmten Stellung, nämlich in aufrechter Stellung, aufnehmen und ist zum anderen nur für einen bestimmten Gewehrtyp geeignet.

Auch die DE-PS 29 25 186 beschreibt einen Waffenhalter für die Montage im Innenraum eines Kraftfahrzeuges, der ein vorderes Halteteil zum Einstecken des Gewehrlaufes und ein hinteres Halteteil umfaßt, das den Gewehrkolben am Übergang zum Kolbenhals umgreift. Bei dieser Ausgestaltung der Halteteile kann das Gewehr günstigerweise nur in einer im wesentlichen waagrechten, vorzugsweise mit dem Vorderschaft leicht nach unten geneigten Position an einer Wand befestigt werden. Jede andere Orientierung des Gewehrs würde zu einer unsicheren Halterung des Gewehrs führen. Ist das Gewehr z.B. in einer aufrechten Lage befestigt, so besteht bei starken Erschütterungen die Gefahr, daß sich der Vorderschaft des Gewehrs aus der vorderen Halterung löst und das Gewehr insgesamt aus der Haltevorrichtung bricht.

Ferner beschreibt die DE-OS 22 63 726 einen Sicherheitsgewehrständer bei welchem mehrere Gewehre arsenalmäßig gelagert werden können, z.B. im Waffendepot. Auch dieser Gewehrständer ist allein schon wegen seiner Baugröße nicht für eine flexible Montage, erst recht nicht für eine Montage in einem Fahrzeug, geeignet.

Des weiteren ist aus der US 2 668 645 eine Haltevorrichtung für ein Gewehr zur Befestigung des Gewehres im Innenraum eines Fahrzeuges bekannt. Die bekannte Gewehr-Haltevorrichtung weist ein separates vorderes und hinteres Halteteil jeweils zur Halterung des Gewehres an einem vorderen bzw. hinteren Gewehrabschnitt auf. Das vordere Halteteil ist nach Art eines Klappverschlusses ausgebildet; und das hintere Halteteil besteht aus einem topfartigen Aufnahmeteil zur Aufnahme des hinteren Endes des Gewehres, welches am Boden des Fahrzeuges befestigt ist. Auch diese bekannte Gewehr-Haltevorrichtung ist nur für die Aufbewahrung von Gewehren eines bestimmten Gewehrtyps ausgelegt.

In der US 2 158 623 ist ferner ein Gewehrhalter mit vorderem und hinterem Halteteil offenbart, die über eine Teleskopstange fest miteinander verbunden sind. Auch dieser Gewehrhalter ist nur für die Aufnahme eines einzigen Gewehrtyps ausgebildet. Etwaige zusätzliche Ansätze/Erhebungen im hinteren Halteteil dienen allein der Befestigung der teleskopartigen Verbindungsstange zwischen hinterem und vorderem Halteteil des Gewehrhalters.

All diesen bekannten Haltevorrichtungen ist demnach gemeinsam, daß für jede Befestigungslage und für jeden Gewehrtyp eine eigene - entsprechend angepaßte - Haltevorrichtung notwendig ist.

Ziel der vorliegenden Erfindung ist es, eine sichere und hinsichtlich Befestigungslage und Gewehrtyp flexible Haltevorrichtung für Gewehre zu schaffen.

Dieses Ziel erreicht die Erfindung durch die Gegenstände der Ansprüche 1, 2 und 13. Weitere Ausführungen der Erfindung sind in den jeweils abhängigen Ansprüchen beschrieben.

Danach schafft die Erfindung ein Halteteil für ein Gewehr zur Aufnahme des hinteren Endes des Gewehres mit einem topfartigen Aufnahmeteil, wobei das Aufnahmeteil an der Innenoberfläche mehrere Ausnehmungen und/oder Ansätze aufweist, die zur Aufnahme des hinteren Endes eines Gewehres derart ausgestaltet sind, daß im Halteteil unterschiedliche Gewehrtypen unterbringbar sind. Des weiteren schafft die Erfindung eine Haltevorrichtung für ein Gewehr (Gewehrhalter) zur Befestigung des Gewehres an einem Wandabschnitt, umfassend wenigstens ein hinteres Halteteil der vorstehend genannten Art und wenigstens ein vorderes Halteteil, welches den Vorderschaft und/oder den Lauf des Gewehrs wenigstens teilweise umgreift.

Von Vorteil dabei ist, daß ein und derselbe Gewehrhalter demnach universell zur Aufnahme von Gewehrtypen mit unterschiedlichen Schulterstützen und/oder unterschiedlichen Gewehrläufen oder Gewehrschäften eingesetzt werden kann.

Von weiterem Vorteil dabei ist, daß die beiden separaten Halteteile des erfindungsgemäßen Gewehrhalters in einem Abstand zueinander in nahezu beliebigen Lagen z.B. in oder an einem Fahrzeug befestigt werden können, wie etwa aufrecht stehend an einem senkrechten Wandabschnitt, liegend am Fußboden, hängend an einer Decke etc., - letzlich in jeder gewünschten Orientierung an geraden oder schrägen bzw. schiefen Wänden oder Wandabschnitten.

Ferner kommt hinzu, daß das hintere Ende des Gewehrs, auf welchem z.B. bei Erschütterungen aufgrund seines Gewichts die größten Kräfte wirken, in dem hinteren Halteteil wie in einer Art Stand- bzw. Haltefuß sicher gehalten wird. Außerdem kann der vordere, leichtere Abschnitt des Gewehres nach Einführen in das hintere Halteteil nahezu ohne Kraftaufwand durch eine einfache Schwenkbewegung in das vordere Halteteil eingeführt oder zur Entnahme des Gewehrs schnell und bequem entnommen werden.

Nach einem bevorzugten Ausführungsbeispiel ist auch das vordere Halteteil mit mehreren Ausnehmungen und/oder Ansätzen zur Aufnahme unterschiedlicher Gewehrtypen ausgestattet.

Nach einer bevorzugten Variante ist das hintere Halteteil derartig topfförmig ausgebildet, daß die Ausnehmungen zur Aufnahme unterschiedlicher Schulterstützen stufenartig an der Innenseite des topfförmigen Halteteils verlaufen. Jede Stufenebene entspricht dabei einer Ausnehmung und ist dem jeweiligen hinteren Gewehrende zumindest teilweise formmäßig angepaßt, so daß das hintere Gewehrende durch das hintere Halteteil zumindest teilweise formschlüssig aufgenommen wird. Auf diese Weise sind unterschiedliche Gewehrtypen mit unterschiedlichen Schulterstützen, z.B. auch Gewehre mit einschiebbaren Schulterstützen, in demselben hinteren Halteteil sicher untergebracht.

Moderne automatische Gewehre verfügen häufig auch über eine einklappbare Schulterstütze, die mit dem übrigen Gewehrabschnittgelenk verbunden ist und z.B. zur Aufbewahrung in einem Depot in Richtung des Gewehrlaufes eingeklappt und an den übrigen Gewehrabschnitt angelegt werden kann. Um das Gewehr auch in einer solchen Situation aufnehmen zu können, ist das hintere Halteteil der erfindungsgemäßen Haltevorrichtung vorzugsweise mit geeigneten Auf- bzw. Ansätzen ausgestattet, welche zur Aufnahme der angelegten Schulterstütze dienen. Das hintere Halteteil ist demnach nicht nur zur Aufnahme verschiedenartiger Schulterstützen in den zuvor beschriebenen Ausnehmungen, sondern auch zur Aufnahme verschiedenartiger Gewehre bei angelegter Schulterstütze universell einsetzbar.

Im übrigen ist das erfindungsgemäße hintere Halteteil auch isoliert - d.h. ohne vorderes Halteteil - einsetzbar, z.B. als Stütz- oder Fußelement zur Aufnahme eines Gewehrs, das montiert, repariert, gereinigt oder andersartig behandelt werden muß. Daher wird Schutz auch für das derart ausgestaltete hintere Halteteil als solches in Anspruch genommen.

Um zu gewährleisten, daß das vordere Halteteil für den erfindungsgemäßen Gewehrhalters an unterschiedliche Gewehrtypen durch einen einfachen Handgriff anpassbar ist, weist dieses ein Innenprofil mit einem oder mehreren lösbar verbindbaren Verstellelementen zur Anpassung an unterschiedliche Gewehrläufe oder Gewehrschäfte auf.

Die erfindungsgemäße Haltevorrichtung sieht ein separates hinteres Halteteil vor, das derart ausgeformt ist, daß es das Gewehrende bei eingeklappter bzw. angelegter Schulterstütze topfartig umgibt. Hiermit kann der erfindungsgemäße Gewehrhalter auch für eine langfristige Lagerung von Gewehren in einem Waffenlager vorteilhaft eingesetzt werden.

Vorzugsweise sind vorderes und hinteres Halteteil - je nach spezifischer Stabilitätsanforderung - aus unterschiedlichem Werkstoff, besonders bevorzugt aus Kunststoff, z.B. aus glasfaserverstärktem Kunststoff, gefertigt. Dies verleiht der erfindungsgemäßen Haltevorrichtung eine gute Stabilität einerseits und ein leichtes Eigengewicht sowie niedrige Fertigungskosten andererseits.

Wie bereits oben erwähnt, sind bekannte Gewehrhalter für die Befestigung eines Gewehrs einer bestimmten Orientierung ausgelegt. Für jede unterschiedliche Orientierung sind unterschiedliche Haltevorrichtungen notwendig. Demgegenüber ist die erfindungsgemäße Haltevorrichtung in einer nahezu beliebigen Orientierung an einem ebenen Wandabschnitt befestigbar. Vorzugsweise weist hierfür das vordere Halteteil an mindestens zwei Seitenwänden und das hintere Halteteil an drei Seitenwänden eine oder mehrere Bohrungen auf, so daß das vordere und hintere Halteteil wahlweise in einer von zumindest drei Orientierungen an einem ebenen Wandabschnitt montierbar verschraubbar ist.

Als Verschluß zum Absperren der erfindungsgemäßen Haltevorrichtung bieten sich verschiedene Varianten an. Besonders vorteilhaft ist der Verschluß eine Art Exzenterverschluß mit: einem aus mindestens zwei gelenkig miteinander verbundenen Riegelteilen bestehenden Verschlußelement, das an einer Seite einer Öffnung zur Aufnahme des Gewehrschaftes und/oder -laufes seitlich angelenkt ist; und einer Ausnehmung an der gegenüberliegenden Seite der Öffnung, in welche das eine Riegelteil des Verschlußelements aufgenommen wird und durch Umlegen des anderen Riegelteils versperrt werden kann.

Bei einer weiteren bevorzugten Variante verfügt das vordere Halteteil über einen Verschluß mit einem einzelnen Riegel, der an einer Seite einer Öffnung zur Aufnahme des Gewehrvorderschaftes seitlich angelenkt ist, und einen Verschlußhaken an der gegenüberliegenden Seite der Öffnung zum Eingreifen in den Riegel bei geschlossener Stellung des Verschlusses. Vorzugsweise ist wenigstens der Verschlußhaken aus flexiblem Kunststoff gefertigt, so daß der Verschluß ein Schnappverschluß ist, der sich mit einem einfachen Handgriff genauso schnell öffnen wie verschließen läßt. Vorteilhaft kann der Verschluß auch mit einem Schloß zur Sicherung des Gewehrhalters versehen werden. Wird beim Einführen des Gewehrs in den erfindungsgemäßen Gewehrhalter der hintere Gewehrabschnitt durch das hintere Halteteil abgestützt, so kann der Gewehrschaft mit einer Hand in das obere Halteteil - je nach Halterungslage - gelegt, gekippt oder gestellt und durch Betätigung des Schnappverschlusses verriegelt und ggf. abgesperrt werden. Umgekehrt läßt sich durch Anheben des Schnappverschlußhakens das Gewehr blitzschnell aus dem oberen Halteteil und sodann aus dem unteren Halteteil lösen.

Die Flexibilität des Schnappverschlußhakens wird vorzugsweise dadurch erhöht, daß dieser - von der Rückseite des Halteteils ausgehend zwischen zwei Seitenabschnitten - frei über die gesamte Höhe des Halteteils verläuft. Zu einer weiteren Sicherung des Verschlusses ist am vorderen Halteteil vorzugsweise ein Bolzen vorgesehen, der im geschlossenen Zustand von einem Seitenabschnitt durch den Schnappverschlußhaken hindurch zum anderen Seitenabschnitt quer zum Riegel durchführbar ist. Der Bolzen kann auch als Riegel mit Exzenter ausgeführt sein, der dann zum Abschließen des Gewehrhalters dient.

Bei einer weiteren bevorzugten Variante verfügt der Riegel an seiner inneren Oberfläche über einen Vorsprung, der im geschlossenen Zustand in eine entsprechende Aussparung am Vorderschaft des Gewehrs eingreift und/oder federnd an der Waffe anliegt. Auf diese Weise wird das Gewehr nicht nur seitlich durch die Seitenwände des vorderen Halteteils, sondern auch gegen Verschiebungen in Laufrichtung festgehalten.

Ferner schafft die Erfindung einen Bausatz für den Zusammenbau einer Haltevorrichtung für ein Gewehr zur Befestigung des Gewehrs an einem Wandabschnitt mit folgenden Bausteinen: mehreren vorderen Halteteilen jeweils unterschiedlicher gewehrspezifischer Parameter, welche den vorderen Gewehrabschnitt umgreifen, und mehreren hinteren Halteteilen der zuvorgenannten Art, jeweils unterschiedlicher gewehrspezifischer Parameter, wobei die jeweiligen hinteren und vorderen Halteteile an einem Wandabschnitt relativ zueinander in der gewünschten Orientierung, insbesondere im inneren eines Fahrzeuges, montierbar sind.

Auf diese Weise stellt die Erfindung einen universell montierbaren Gewehrhalter-Baukasten zur Verfügung. Die einzelnen vorderen und hinteren Halteteile des Baukastens unterscheiden sich hinsichtlich ihrer spezifischen Parameter, z.B. hinsichtlich Größe, Material, Verschlußtechnik, etc., so daß je nach den spezifischen vorgefundenen Befestigungsbedingungen die geeigneten Halteteile ausgewählt und in der gewünschten Orientierung montiert werden können.

Die Bausteinsorte "vorderes Halteteil" umfaßt beispielsweise Halteteile unterschiedlicher Höhe, so daß der vordere Gewehrabschnitt im gewünschten Abstand zur Befestigungswand gehaltert werden kann. Bei einer bevorzugten Baukastenvariante ist das vordere Halteteil mit einheitlicher Höhe ausgestaltet und über anbaubare Zwischen- bzw. Distanzstücke unterschiedlicher Länge im gewünschten Abstand zur Befestigungswand montierbar.

Sind bei dem erfindungsgemäßen Gewehrhalter-Bausatz n verschiedene Bausteine pro Bausteinsorte vorgesehen, so lassen sich bereits n² unterschiedliche Haltevorrichtungen realisieren. Wird der erfindungsgemäße Bausatz für den Zusammenbau einer Haltevorrichtung entsprechend vorrätig gehalten, kann in kürzester Zeit eine einem bestimmten Gewehrtyp individuell angepaßte Haltevorrichtung für die Aufbewahrung des Gewehrs in allen nur denkbaren Lagen und Stellungen, z.B. am Fußboden, an schrägen bzw. schiefen Wänden, an der Decke, etc., geschaffen werden.

Vorzugsweise sind die Bausteinsorten des Gewehrhalter-Bausatzes im Detail genauso ausgebildet wie die zuvor beschriebenen vorderen und hinteren Halteteile der erfindungsgemäßen Haltevorrichutng. Zu der Flexibilität des erfindungsgemäßen Bausatzes kommen dann als weitere Vorteile die zuvor beschriebenen Vorteile der einzelnen Bausteinsorten hinzu.

Weitere Vorteile und Ausgestaltungen der Erfindung ergeben sich aus der nachfolgenden Beschreibung bevorzugter Ausführungsbeispiele. In der Beschreibung wird auf die beigefügte schematische Zeichnung Bezug genommen. In der Zeichnung zeigen:
- Fig. 1: drei perspektivische Ansichten einer bevorzugten Ausführung eines vorderen Halteteils für den erfindungsgemäßen Gewehrhalter;
- Fig. 2: drei perspektivische Ansichten eines der Art nach bekannten hinteren Halteteils eines Gewehrhalters;
- Fig. 3: drei perspektivische Ansichten eines weiteren, der Art nach bekannten, hinteren Halteteils eines Gewehrhalters;
- Fig. 4a,b,c: Seiten- und Unteransichten eines in einer Haltevorrichtung positionierten Gewehrs zur Veranschaulichung unterschiedlicher Befestigungslagen;
- Fig. 5a,b,c: Seiten- und Unteransichten eines Gewehrs mit angeklappter Schulterstütze in einer weiteren Haltevorrichtung;
- Fig. 6: zwei perspektivische Ansichten eines Zwischenstückes zur Montage des Halteteils nach Fig. 1;
- Fig. 7: eine perspektivische Ansicht eines Ausführungsbeispiels für ein hinteres Halteteil;
- Fig. 8a-d: Seitenansichten von in dem hinteren Halteteil gemäß Fig. 7 positionierten Gewehren vom Typ A mit aus- und eingeklappter Schulterstütze sowie vom Typ B mit fester und einschiebbarer Schulterstütze;
- Fig. 9a,b: zwei Schnittansichten eines weiteren Ausführungsbeispiel für ein vorderes Halteteil; und
- Fig. 10: zwei perspektivische Ansichten eines weiteren Ausführungsbeispiels eines vorderen Halteteils für den erfindungsgemäßen Gewehrhalter.

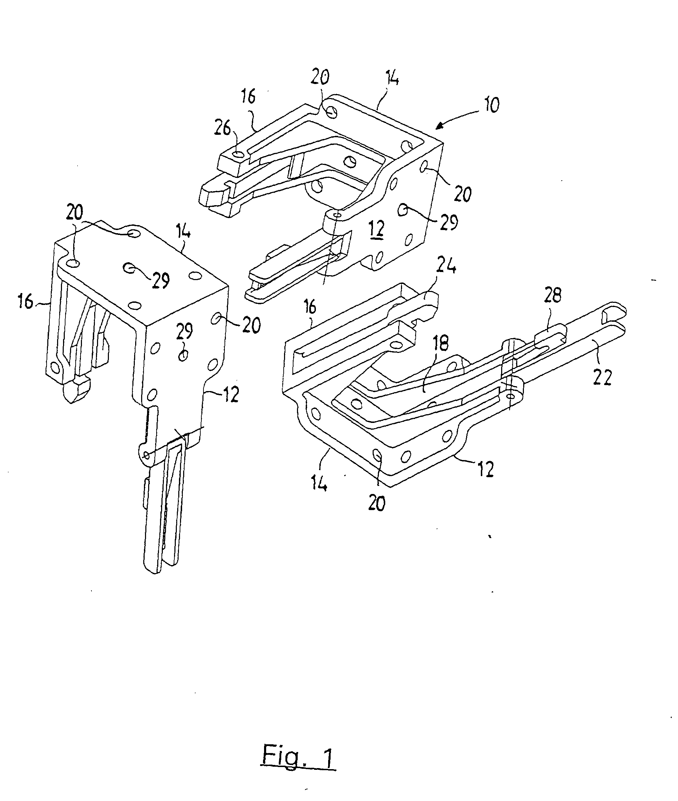

In der nachfolgenen Figurenbeschreibung sind funktionell gleichen Vorrichtungsteilen gleiche Bezugzeichen zugeordnet. In den perspektivischen Ansichten sind diesselben Halteteile jeweils aus einer anderen Blickrichtung, z.B. von von hinten, von vorne und von der Seite, wie in Fig. 1, dargestellt. Ferner wird im folgenden die erfindungsgemäße Haltevorrichtung in Verbindung mit der Halterung von automatischen Gewehren beschrieben. Dies ist jedoch nicht einschränkend zu verstehen, da die erfindungsgemäße Haltevorrichtung genauso für andere Gewehrtypen, z.B. Jagdwaffen, anwendbar ist.

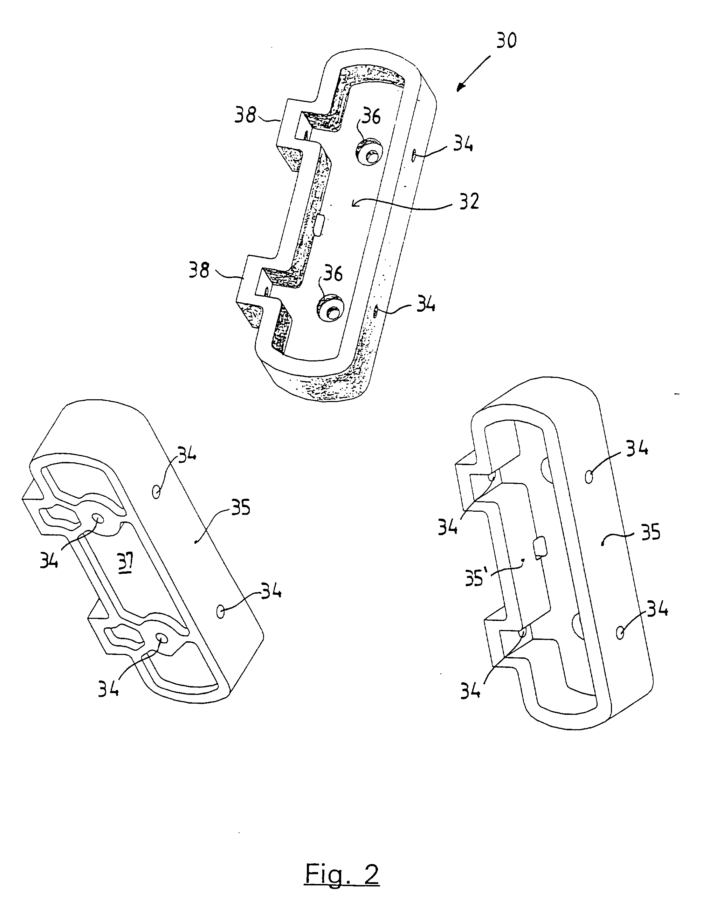

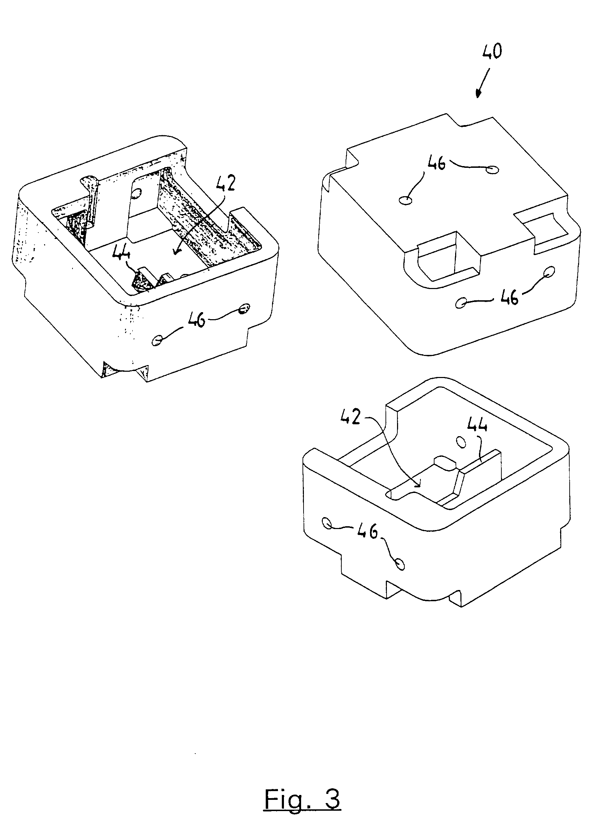

Des weiteren sind die in den Fig. 2 und 3 dargestellten hinteren Halteteile eines Gewehrhalters ihrer Art nach aus dem Stand der Technik bekannt, z.B. aus US 2 668 645. Ihre Darstellung im nachfolgenden dient u.a. der Veranschaulichung der erfindungsgemäßen Kombinationsmöglichkeiten.

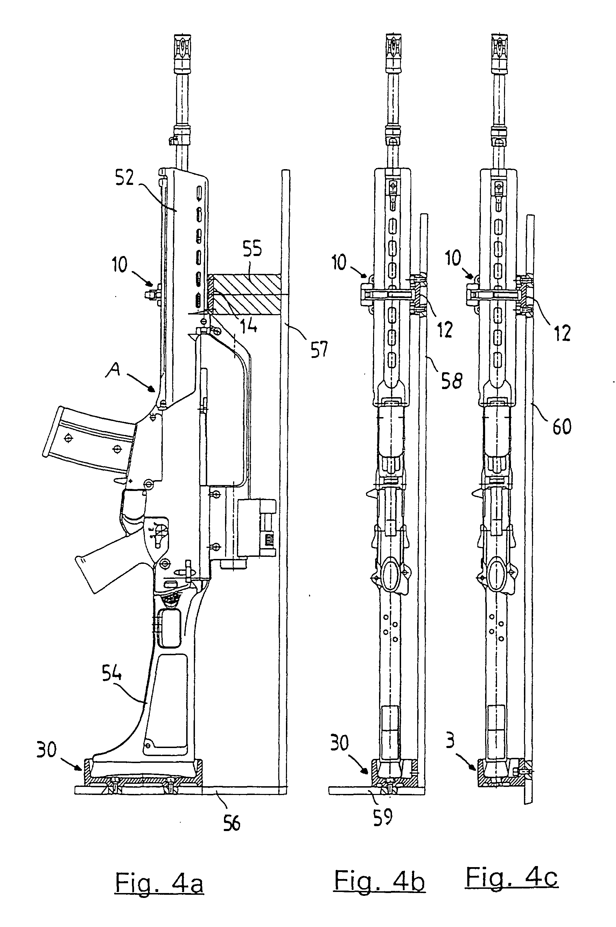

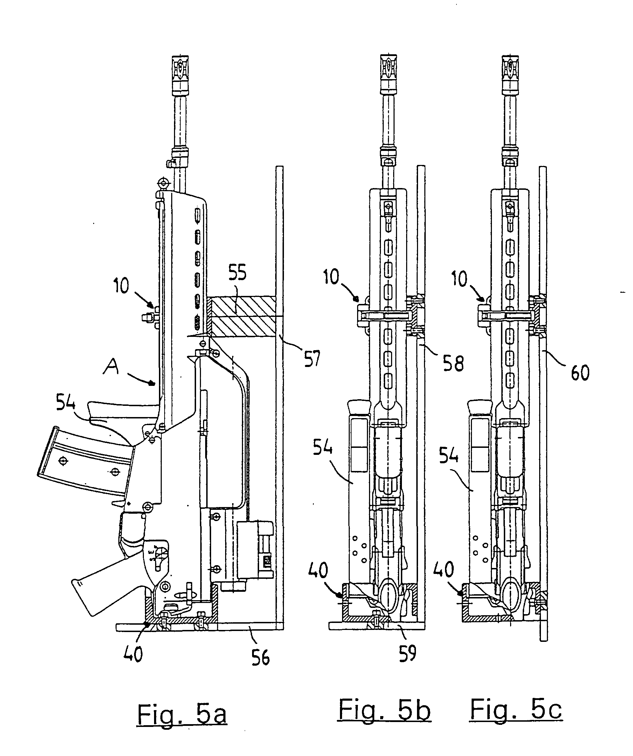

Fig. 1 zeigt in perspektivischer Darstellung eine bevorzugte Variante eines vorderen Halteteils 10, das den Vorderschaft eines Gewehrs (vgl. hierzu Fig. 4 und 5) unmittelbar anliegend vollständig umgreift. Hierzu weist das Halteteil drei Seitenwände 12, 14, 16 auf, die rechtwinklig zueinander stehen und an ihrer inneren Oberfläche ein vorstehendes Profil 18 aufweisen, welches einem Abschnitt des Vorderschaftes des Gewehrs formmäßig angepaßt ist. Die Seitenwände 12 und 14 verfügen über Bohrungen 20 zur Durchführung von Befestigungsmitteln für die Montage des Halteteils 10 an einer Wand oder einem Wandabschnitt, z.B. im Innern eines Kraftfahrzeuges. Wahlweise wird das Halteteil 10 mit einer oder mehreren seiner Seitenwände an der Wand anliegend montiert. Wird die mittlere Bohrung 29 in der Seitenwand 14 zur Befestigung mitverwendet, so kann das Halteteil bei eingespanntem Gewehr, das mit einem Vorhängeschloß gesichert ist, nicht abmontiert werden, da das Gewehr den Zugang zur mittleren Bohrung 29 versperrt und damit das Lösen des entsprechenden Befestigungsmittels verhindert.

An seiner Vorderseite verfügt das Halteteil 10 über einen Verschlußmechanismus mit einem länglichen Riegel 22, der am vorderen verjüngten Ende der Seitenwand 12 gelenkig angebracht ist und in geschlossenem Zustand von einem vom vorderen Ende der Seitenwand 16 aus vorstehenden Verschlußhaken 24 gehalten wird. Dieser Verschlußhaken 24 verläuft ausgehend von der Rückseite 14 des Halteteils 10 frei zwischen zwei Seitenabschnitten der Seitenwand 16. Zusätzlich ist das Halteteil 10 aus leichtem Kunststoff gefertigt, so daß der Verschlußhaken 24 quer zur Seitenwand 16 biegsam ist und wie ein federnder Schnappverschluß in den Riegel 22 im geschlossenen Zustand eingreift. Beim Öffnen des Verschlußmechanismus wird der Verschlußhaken 24 nach hinten leicht weggebogen, so daß er den Riegel 22 freigibt.

Durch einen Verriegelungsbolzen (in Fig. 1 nicht dargestellt) ist der Verschluß im geschlossenen Zustand absperrbar. Dabei wird der Bolzen durch eine Bohrung 26 von einem Seitenabschnitt der Seitenwand 16 durch den Verschlußhaken 24 hindurch zum anderen Seitenabschnitt durch eine Bohrung 26 durchgeführt. Ferner hat der Riegel 22 an seiner Innenseite einen Vorsprung 28, der über einen Steg federnd mit dem Riegel 22 verbunden ist und im geschlossenen Zustand in eine entsprechende Aussparung im Vorderschaft des Gewehrs greift, um eine Verschiebung des Gewehrs, z.B. bei etwaigen Erschütterungen, zu verhindern. Ferner dient der Vorsprung 28 als Feder, um die Waffe spielfrei zu halten.

Fig. 2 zeigt drei perspektivische Ansichten einer der Art nach bekannten Variante eines hinteren Halteteils 30 einer Gewehrhaltevorrichtung. Das Halteteil 30 ist aus Kunststoff gefertigt mit einer topfartigen Vertiefung 32 zur Aufnahme des Endabschnittes einer Schulterstütze oder eines Gewehrkolbens. Die Vertiefung 32 ist dabei derart ausgeformt, daß sie das hintere Ende der Schulterstütze oder des Gewehrkolbens weitgehend formschlüssig umgibt. Ferner ist das Halteteil 30 mit Bohrungen 34 zum Durchführen von Befestigungsmittel zur Montage des Halteteils 30 versehen, und zwar an den Seitenwänden 35, 35' und an der Rückwand 37 des Halteteils 30, um eine möglichst flexible Montage wahlweise an einer der Seitenwände 35, 35' oder der Rückwand 37 in verschiedensten Befestigungslagen des Halteteils 30 zu gewährleisten. Außerdem ist das Halteteil 30 mit Senkungen 36 an der Inneseite der Rückwand 37 und mit Ausbuchtungen 38 an der Seitenwand 35' ausgeformt, so daß etwaige Befestigungsmittel aus dem Aufnahmebereich der Vertiefung 32 in Richtung Montagewand verrückt sind.

Die beiden in Fig. 1 und 2 beschriebenen Halteteile 10 und 30 werden beispielsweise in einem Kraftfahrzeug in einem Abstand zueinander befestigt, und zwar derart, daß ein Gewehr - mit dem Vorderschaft vom vorderen Halteteil umgriffen und mit dem Gewehrende im hinteren Halteteil abgestützt - in beliebiger Lage, z.B. aufrecht stehend an einer Seitenwand, liegend am Fußboden, an einer schrägen Wand oder auch an der Decke sicher untergebracht ist.

Nach einem weiteren Aspekt stellt die vorliegende Erfindung einen multivariablen Gewehrhalter-Baukasten zur Verfügung, bestehend aus zwei Bausteinsorten, nämlich einerseits der Sorte "vorderes Halteteil" und andererseits der Sorte "hinteres Halteteil". Jede Bausteinsorte umfaßt dabei beliebig viele Bausteine unterschiedlicher spezifischer Parameter, z.B. hinsichtlich Größe, Formgebung, Material, Verschlußmechanismus etc. Erfindungsgemäß gehören die im Zusammenhang mit den Fig. 1 bis 19 beschriebenen vorderen und hinteren Halteteile jeweils den genannten Bausteinsorten an.

Z.B. zeigt Fig. 3 einen weiteren Baustein eines Gewehrhalter-Baukastens, welcher der Bausteinsorte "hinteres Halteteil" angehört. Dabei sind drei perspektivische Ansichten eines der Art nach bekannten hinteren Halteteils 40 dargestellt, welches ebenfalls topfartig ausgeformt ist und eine Vertiefung 42 zur Aufnahme eines hinteren Gewehrendes bei angeklappter Schulterstütze aufweist. Moderne automatische Gewehre verfügen häufig über eine mit dem übrigen Gewehrabschnitt angebrachte Schulterstütze, die bei Bedarf umgeklappt und an dem übrigen Gewehrabschnitt angelegt werden kann. In diesem Zustand ist das Gewehr in den Haltetopf 40 einführbar. Eine Zwischenwand 44 innerhalb der Vertiefung 42 sorgt für eine stabile Halterung des hinteren Gewehrabschnittes und für die richtige Waffeneinbaulage. Genauso wie das Halteteil 30 in Fig. 2 verfügt auch das Halteteil 40 über entsprechende Bohrungen 46 für die Montage des Halteteils 40 in unterschiedlichen Stellungen, wahlweise mit seiner Rückseite oder einer seiner Seitenwände am Boden, einer Wand oder einem Wandabschnitt.

Die nachfolgenden Figuren 4 und 5 zeigen ein Gewehr vom Typ A, das jeweils in drei unterschiedlichen Befestigungslagen in demselben Gewehrhalter untergebracht ist:

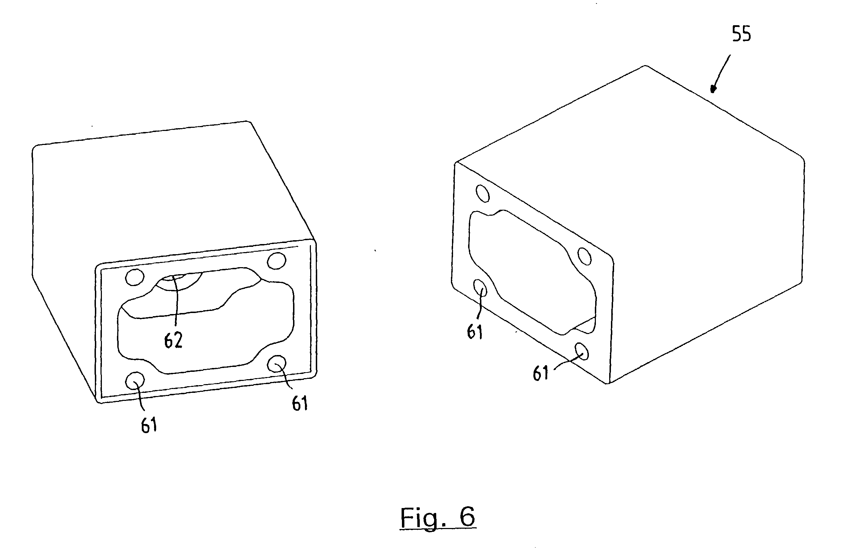

In der Seitenansicht in Fig. 4a wird ein Vorderschaft 52 des Gewehrs A von einem vorderen Halteteil 10 (hier im Schnitt dargestellt) umgriffen, welches demjenigen in Fig. 1 entspricht. Ferner steht eine Schulterstütze 54 in einem topfartigen hinteren Halteteil 30, so wie es in Verbindung mit Fig. 2 beschrieben ist. Dabei ist das hintere Halteteil 30 mit seiner Rückseite über zwei Befestigungsmittel an einem Wandabschnitt 56, z.B. eines Fußbodens montiert. Das vordere Halteteil 10 stützt sich mit seiner Rückseite 14 (vgl. Fig. 1) über ein Zwischenstück 55 (vgl. Fig. 6) an einem Wandabschnitt 57 ab, der senkrecht um Wandabschnitt 56 steht. In dieser Halterungslage steht das Gewehr A senkrecht von der Wand 57 ab.

Die Unteransicht in Fig. 4b zeigt das Gewehr A in denselben Halteteilen 10 und 30, die jedoch in einer anderen Position montiert sind. Das vordere Halteteil 10 stützt sich mit seiner Seitenwand 12 (vgl. Fig. 1) an einem Wandabschnitt 58 ab. Das hintere Halteteil 30 ist mit seiner Rückseite an einem Wandabschnitt 59, z.B. eines Fußbodens, montiert und liegt mit einem Seitenabschnitt an der Wand 58 an. Die Wandabschnitte 58 und 59 stehen dabei senkrecht aufeinander, so das Gewehr A in dieser Befestigungslage unmittelbar an der Wand 58 anliegt.

Fig. 4c zeigt eine Unteransicht des Gewehrs A, das wiederum in denselben Halteteilen 10 und 30, aber in einer weiteren dritten Befestigungslage untergebracht ist. Die beiden Halteteile 10 und 30 sind hier jeweils seitlich an einem einzigen Wandabschnitt 60 befestigt. Das Gewehr A liegt hier unmittelbar an der Wand 60 an und stützt sich hierbei mit der Schulterstütze 54 im hinteren Halteteil 30 ab. Aus dem vorderen Halteteil 10 kann das Gewehr A in Richtung parallel zur Wand 60 entnommen bzw. eingeführt werden. Der Wandabschnitt 60 kann dabei jede beliebige Lage einnehmen, z.B. aufrecht stehend, liegend, geneigt oder über Kopf.

Die Figuren 5a, 5b und 5c zeigen das Gewehr A nunmehr mit eingeklappter Schulterstütze 54. Das Gewehr A ist in diesem Zustand in einer Haltevorrichtung, bestehend aus einem hinteren Halteteil 40 nach Fig. 4 und einem vorderen Halteteil 10 nach Fig. 1, untergebracht. Die Montage der Halteteile 10 und 40 an den Wandabschnitten 56, 57, 58, 59 und 60 - und die hieraus resultierende Befestigungslage des Gewehrs A - entspricht derjenigen der Halteteile 10 und 30 in den Fig.en 4a, 4b und 4c.

Das vordere Halteteil 10 ist in den Figuren 4a und 5a über ein Zwischenstück 55 an der Wand 57 befestigt. Je nach Gewehrtyp sind Zwischenstücke 55 unterschiedlicher Art, insbesondere unterschiedlicher Länge vorgesehen, um das Gewehr A in der in den Fig.en 4a und 5a gezeigten Lage im gewünschten Abstand zur Befestigungswand 56 zu haltern.

Fig. 6 zeigt ein Beispiel für ein derartiges Zwischenstück 55 in perspektivischer Ansicht. Dieses hat im wesentlichen die Form eines hohlen Quaders mit offenem vorderen und hinteren Ende, der in seiner Querschnittsform der Rückseite 14 des vorderen Halteteils 10 angepaßt ist. Vorzugsweise ist das Zwischenstück 55 ein Formgußteil aus Kunststoff. In den Seitenwänden verlaufen in axialer Richtung vier Durchbohrungen 61, welche bei der Montage auf den Bohrungen 20 der Rückseite 14 des vorderen Halteteils 10 aufliegen. Das vordere Halteteil wird montiert, indem geeignete Befestigungsmittel durch die Bohrungen 20 der Rückseite 14 des vorderen Halteteils 10 und weiter durch die Durchbohrungen 61 hindurch in einen Wandabschnitt getrieben werden.

Die linke Abbildung des Zwischenstückes 55 in Fig. 6 zeigt ferner, daß das Zwischenstück 55 an seiner Rückseite, mit welcher das Zwischenstück 55 an dem Wandabschnitt 57 (vgl. Fig. 4a und 5a) anliegt, teilweise, d.h. bis auf eine zentrale Öffnung 62, außen verschlossen ist. Wird bei der Montage des vorderen Halteteils 10 die mittlere Bohrung 29 an der Rückseite 14 (vgl. Fig. 1) mitverwendet, so führt das entsprechende Befestigungsmittel im wesentlichen axial im Inneren des Zwischenstückes 55 durch die Öffnung 62 in den Wandabschnitt 57. Wie bereits zuvor erwähnt, kann dann das Halteteil 10 einschließlich des Zwischenstückes 55 bei eingespanntem Gewehr, das beispielsweise mit einem Vorhängeschloß gesichert ist, nicht abmontiert werden, da der Zugang zum Befestigungsmittel in der mittleren Bohrung 29 versperrt ist.

Bei einer weiteren - hier nicht dargestellten - Variante eines Zwischenstückes ist die oben genannte Öffnung 62 als über die gesamte Länge eines im wesentlichen massiven Zwischenstückes verlaufender Kanal für die Aufnahme des durch die mittlere Bohrung 20 geführten Befestigungsmittels ausgebildet.

Das in Fig. 6 gezeigte Zwischenstück 55 weist eine bestimmte, dem jeweiligen Gewehrtyp angepaßte Länge auf. Denkbar sind aber auch Zwischenstücke, die aus mehreren ineinandergeschachtelten Abschnitten bestehen oder sich - innerhalb bestimmter Grenzen - einstellen lassen.

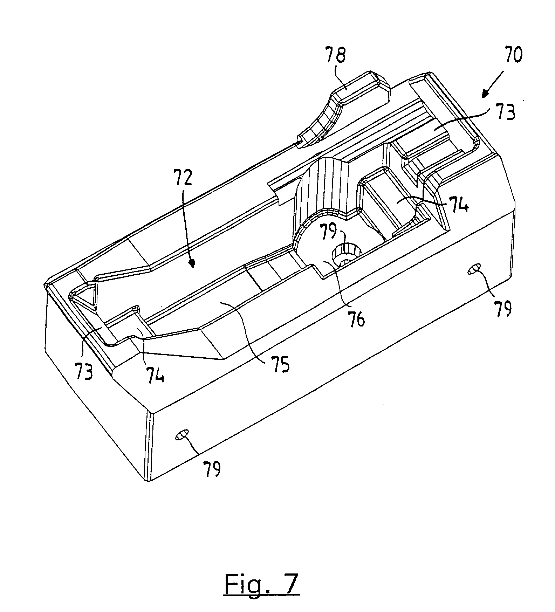

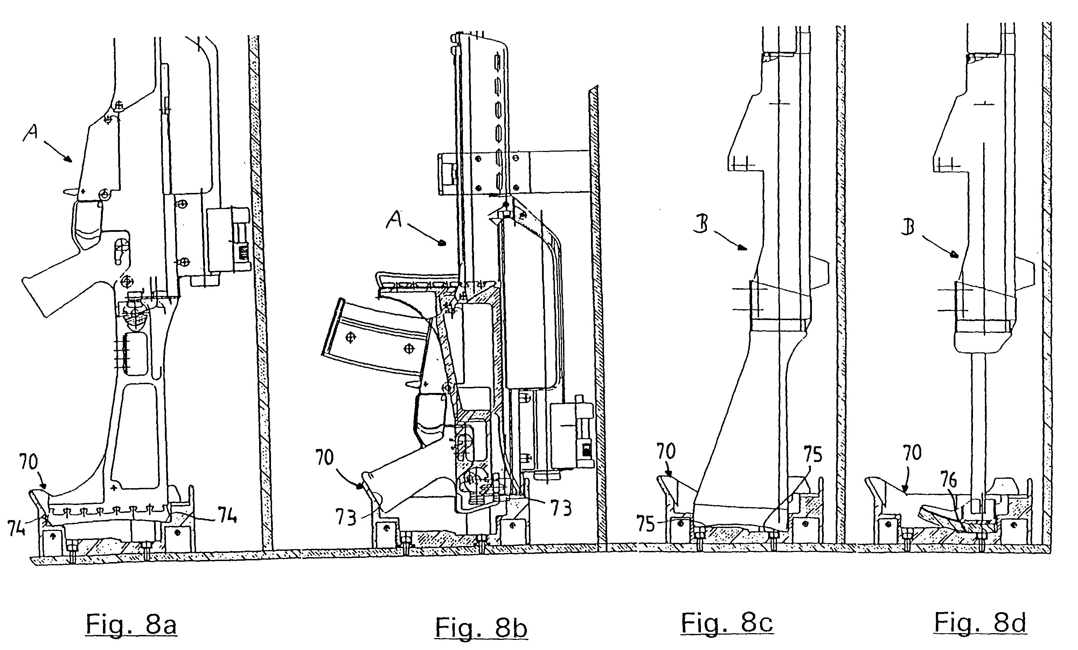

Nach der Erfindung können unterschiedliche Gewehrtypen in ein und demselben Gewehrhalter aufgenommen werden. Hierfür weist dieser z.B. das in Fig. 7 gezeigte bevorzugte Ausführungsbeispiel eines hinteren Halteteils 70 auf. Ähnlich wie in Fig. 2 weist das hintere Halteteil 70 eine topfartige Vertiefung 72 zur Aufnahme des Endabschnittes einer Schulterstütze oder eines Gewehrkolbens auf. Diesmal ist die topfartige Vertiefung 72 jedoch mit mehreren Ausnehmungen 73 bis 77 an ihrer Innenseite derart strukturiert, daß verschiedenartige Schulterstützen bzw. Gewehrkolben in demselben hinteren Halteteil 70 aufgenommen werden können, wie im Zusammenhang mit Fig. 8 näher veranschaulicht wird. Dabei bildet die Ausnehmung 76 die tiefste Stelle in der Vertiefung 72. In der nächsten Ebenen liegt die Ausnehmung 75; sodann schleißen sich jeweils paarweise die Ausnehmungen 74 und 73 an, die im wesentlichen als auf derselben Ebene liegende stufenartige Einschnitte an gegenüberliegenden Seiten der Innenwand des topfartigen Halteteils 70 ausgebildet sind. Daneben weist das Halteteil 70 gemäß Fig. 7 auch mehrere Bohrungen 79 durch eine Seiten- und eine Rückwand auf, so daß das Halteteil 70 wahlweise an einer diesen Seiten mit einer Montagewand verschraubbar ist. Von der Vorderseite einer Seitenwand des topfförmigen Halteteils 70 steht ferner ein Ansatz 78 ab, welcher der Fixierung einer angelegten Schulterstütze dient.

Die Fig. 8a-d zeigen die verschiedenen Montagezustände bei Unterbringung unterschiedlicher Gewehrtypen in dem hinteren Halteteil 70 gemäß Fig. 7. Dabei sind lediglich die hinteren Gewehrabschnitte der unterschiedlichen Gewehre in dem Halteteil 70 dargestellt. Dieselben Merkmale tragen die selben Bezugszeichen wie in Fig. 7.

Gemäß Fig. 8a ist ein Gewehr vom Typ A im hinteren Halteteil 70 montiert. Das Gewehr A steht mit seinem Gewehrschaft auf den Ausnehmungen 74 des topfartigen Vertiefung 72 des Halteteils 70 (hier im Schnitt dargestellt). Das hintere Ende des Gewehrschaftes wird demnach an seinen Eckabschnitten formschlüssig umfaßt. Im übrigen ist das hintere Ende des Gewehrschaftes im wesentlichen frei. Dennoch steht das Gewehr A gemäß Fig. 8 sicher und fest im hinteren Halteteil 70 und wird von einem (hier nicht dargestellten) vorderen Halteteil an seinem Vorderschaft umgriffen, das z.B. über ein geeignetes Zwischenstück (ebenfalls nicht dargestellt) an dem senkrechten Wandabschnitt montiert ist.

Gemäß Fig. 8b ist ebenfalls ein Gewehr vom Typ A jedoch mit eingeklappter Schulterstütze in dem Halteteil 70 untergebracht. Dabei stützt sich das hintere Gewehrende mit eingeklappter Schulterstütze an den entsprechend angepaßten Ausnehmungen 73 sowie an dem (in Fig. 8b verdeckten) Ansatz 78 des Halteteils 70 ab. In Fig. 8b ist auch ein vorderes Halteteil dargestellt, welches den Vorderschaft des Gewehres A umgreift und sich über ein Zwischenstück an der senkrechten Montagewand abstützt.

Gemäß Fig. 8c ist ein Gewehr vom Typ B im hinteren Halteteil 70 der erfindungsgemäßen Haltevorrichtung montiert. Der im Vergleich zum Gewehr A schmälere Gewehrschaft ist in die Ausnehmung 75 des Halteteils 70 eingeführt und wird zumindest an seinen Eckabschnitten formschlüssig umgeben.

Gemäß Fig. 8d ist ebenfalls das Gewehr vom Typ B montiert, allerdings mit einer einschiebbaren Schulterstütze. Das hintere Ende dieser Schulterstütze wird von der tiefsten Ausnehmung 76, die der einschiebbaren Schulterstütze formmäßig zumindest weitgehend angepaßt ist, aufgenommen, so daß auch dieser Gewehrtyp sicher im Halteteil 70 gelagert ist.

Das hintere Halteteil 70 der erfindungsgemäßen Haltevorrichtung ist danach für zumindest vier verschiedene Befestigungsvarianten einsetzbar, nämlich für das Gewehr A mit aus- und eingeklappter Schulterstütze sowie für das Gewehr B mit fester und einschiebbarer Schulterstütze.

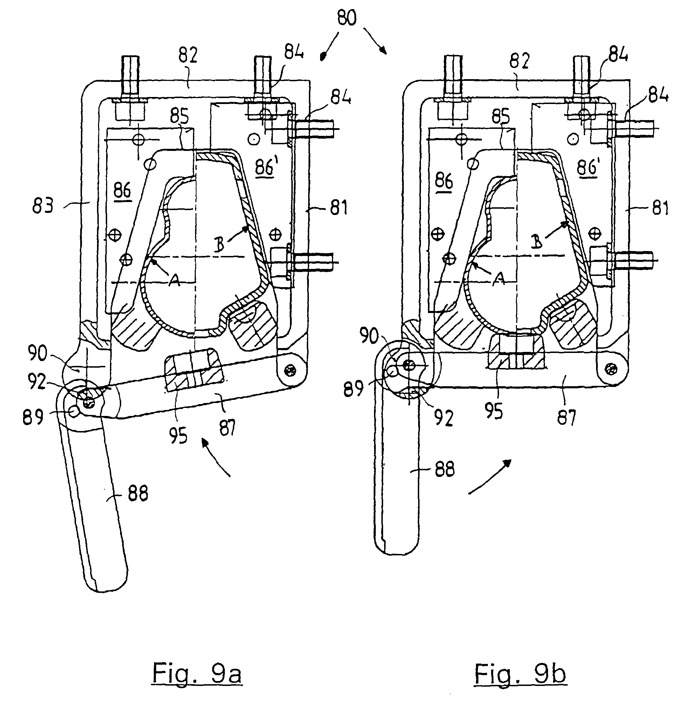

In den Figuren 9a und 9b ist ein weiteres Ausführungsbeispiel für ein vorderes Halteteil 80 für den erfindungsgemäßen Gewehrhalter dargestellt. Ähnlich wie das Halteteil 10 in Figur 1 weist dieses Halteteil 80 drei Seitenwände 81, 82 und 83 auf, die im wesentlichen rechtwinklig zueinander stehen und an ihren zugewandten inneren Oberflächen ein vorstehendes Innenprofil 85 aufweisen. Dieses Profil 85 ist dabei zumindest abschnittsweise an den Vorderschaft eines aufzunehmenden Gewehres angepaßt. Zur Anpassung des Halteteils 80 an unterschiedliche Gewehrtypen mit unterschiedlichen Vorderschäften sind ferner zwei Verstellelemente 86 und 86' vorgesehen, die über Bohrungen 84 mit dem Profil 85 in der in den Figuren 9a und 9b dargestellten Weise verbindbar sind. Das Verstellelement 86 steht etwas von dem Profil 85 vor und dient dabei der Anpassung der Aufnahmeöffnung an einen in den Figuren lediglich angedeuteten Gewehrschaft vom Gewehrttyp A. Hingegen verläuft das Verstellelement 86' mit seiner nach innen gekehrten Seite im wesentlichen bündig mit dem Profil 85, so daß ein Gewehrschaft vom Typ B dort formschlüssig anliegen kann. Die Seitenwände 81 und 82 verfügen jeweils über vier Bohrungen 88, durch welche hindurch das Halteteil 80 wahlweise an einer der Seiten 81 oder 82 mit einer ebenen Wand verschraubbar ist.

An der vorderen offenen Seite des Halteteils 80 ist ein zweigliedriges Verschlußelement in der Art eines Exzenterverschlusses vorgesehen. Das Verschlußelement besteht aus einem Seitenteil 87, das mit einem Ende vorne an der Seitenwand 81 angelenkt und mit seinem anderen gegenüberliegenden Ende mit einem Riegel 88 gelenkig verbunden ist. Das vordere verdickte Ende der Seitenwand 83 verfügt über eine dem vorderen freien Ende des Riegels 87 angepaßte Ausnehmung 90. Beim Verschließen des Halteteils 80 wird das Seitenteil 87 in Richtung des in Fig. 9a eingezeichneten Pfeils umgelegt, bis sein vorders Ende in der Ausnehmung 90 der Seitenwand 83 aufgenommen ist. Zum Verriegeln des Halteteils 80 wird sodann noch der Riegel 88 in Richtung des in Fig. 9b eingezeichneten Pfeils geklappt, bis er auf das Seitenteil 87 aufliegt. In diesem Zustand ist der Exzenterriegel 88 mit der Seitenwand 83 des Halteteils versperrt, aufgrund der Tatsache, daß ein gegenüber der Drehachse des Riegels 88 exzentrischer und von der Oberseite des Riegels 88 vorstehender Zapfen 89 während der Schwenkbewegung hinter einen Ansatz 92 in der Ausnehmung 90 der Seitenwand 83 geführt wird, so daß dieser Ansatz 92 den Zapfen 89 und damit den Riegel 88 in der geschlossen Stellung festhält. Bei eingelegter Waffe wird die Verriegelung von Zapfen 89 am Riegel 88 und Ansatz 92 an der Seitenwand 83 aufgrund des durch den eingebauten Gewehrschaft auf das Seitenteil 87 ausgeübten Gegendruckes günstigerweise verkeilt. Diese Verkeilung wird ferner dadurch verstärkt, daß an der Innenseite des Seitenteils 87 ein Vorsprung 95 aus einem elastischen Material vorgesehen ist, der die Spannung des eingebauten Gewehrs auf das geschlossene Seitenteil 87 überträgt.

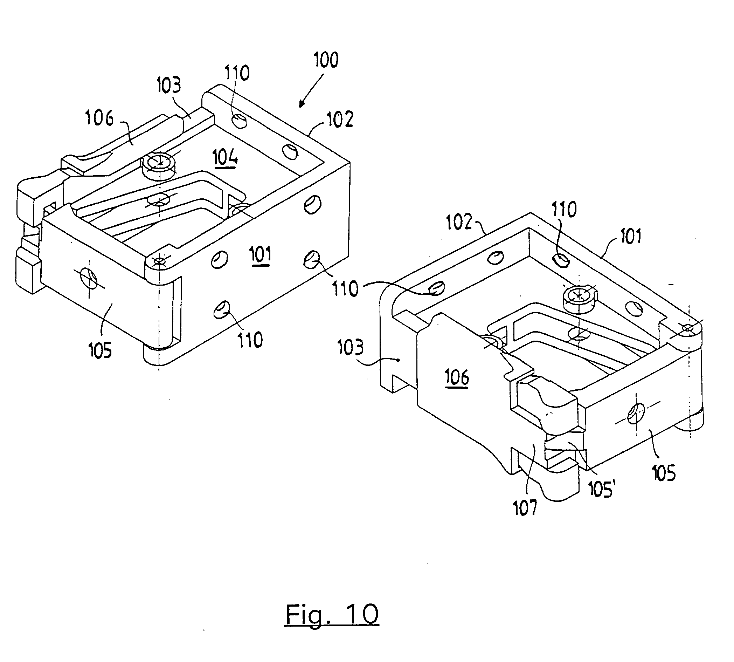

Schließlich zeigt Figur 10 noch ein weiteres Ausführungsbeispiel für ein vorderes Halteteil 100 für den erfindungsgemäßen Gewehrhalter. Dieses weist ebenfalls drei in wesentlichen senkrecht zueinander stehende Seitenwände 101, 102 und 103 mit einem an ihrer Innenseite vorstehenden Profil 104 auf, auf welchem der Vorderschaft eines montierten Gewehres anliegt. In den Seitenwänden 101 und 102 sind mehrere Bohrungen 110 vorgesehen, um eine flexible Montage des Halteteils 100 zu ermöglichen.

Das vordere Halteteil 100 verfügt ebenfalls über einen Riegel 105, der am vorderen Ende der Seitenwand 101 angelenkt und im geschlossenen Zustand über einen Verschlußmechanismus mit der gegenüberliegenden Seitenwand 103 versperrbar ist. Hierfür ist ein Schieber 106 auf der Seitenwand 103 verschiebbar gelagert. Der Schieber 106 verfügt über ein Nasenelement 107, welches bei nach vorne geschobenem Schieber 106 und bei geschlossenem Zustand des Riegel 105 einen hakenförmigen Ansatz 105' am freien Ende des Riegels 105 umfaßt, so daß der Riegel 105 gegen ein Öffnen gesperrt wird. Beim Zurückschieben des Schiebers 106 entlang der Seitenwand 103 wird der Ansatz 105' aus dem Nasenelement 107 befreit und der Riegel 105 zum Öffnen der Haltevorrichtung 100 durch Verschwenken des Riegels 105 frei gegeben.

Anstelle dieser Schieberverriegelung ist selbstversändlich auch die Kombination des Halteteils 100 mit einer Exzenterveriegelung ähnlich wie beim Halteteil 80 gemäß Fig. 9 denkbar.

## Patentansprüche

1. Halteteil für ein Gewehr zur Aufnahme des hinteren Endes des Gewehrs (A, B) mit einem topfartigen Aufnahmeteil (70), **dadurch gekennzeichnet**, daß das Aufnahmeteil (70) an der Innenoberfläche mehrere Ausnehmungen (73, 74, 75, 76) und/oder Ansätze (78) aufweist, die zur Aufnahme des hinteren Endes eines Gewehres (A, B) derart ausgestaltet sind, daß im Halteteil unterschiedliche Gewehrtypen unterbringbar sind.

2. Haltevorrichtung für ein Gewehr (A; B) zur Befestigung des Gewehrs an einem Wandabschnitt, mit wenigstens einem hinteren Halteteil nach Anspruch 1 und wenigstens einem vorderen Halteteil (10; 80; 100), welches den Vorderschaft (52) und/oder den Lauf des Gewehrs (A) wenigstens teilweise umgreift.

3. Haltevorrichtung nach Anspruch 2, **dadurch gekennzeichnet**, daß auch das vordere Halteteil (80) mit mehreren Ausnehmungen und/oder Ansätzen zur Aufnahme unterschiedlicher Gewehrtypen ausgestattet ist.

4. Haltevorrichtung nach Anspruch 3, **dadurch gekennzeichnet**, daß im hinteren Halteteil (70) die Ausnehmungen zur Aufnahme unterschiedlicher Schulterstützen stufenartig an der Innenseite des Halteteils (70) ausgebildet sind.

5. Haltevorrichtung nach Anspruch 3 oder 4, **dadurch gekennzeichnet**, daß das vordere Halteteil ein Innenprofil (85) mit einem oder mehreren lösbar verbindbaren Verstellelementen (86, 86') aufweist.

6. Haltevorrichtung nach Anspruch 2, **dadurch gekennzeichnet**, daß das hintere Halteteil (40) derart ausgebildet ist, daß es das Gewehrende bei angelegter Schulterstütze topfartig umgibt.

7. Haltevorrichtung nach einem der Asprüche 2 bis 6, **dadurch gekennzeichnet**, daß das vordere Halteteil an mindestens zwei Seitenwänden und das hintere Halteteil an drei Seitenwänden mit Bohrungen (20; 34; 46; 79; 84) zur Befestigung versehen ist/sind.

8. Haltevorrichtung nach einem der Ansprüche 2 bis 7, **dadurch gekennzeichnet**, daß das vordere Halteteil (10) über einen Verschluß verfügt mit
- einem Riegel (22), der an einer Seite einer Öffnung zur Aufnahme des Gewehrschaftes und/oder - laufes seitlich angelenkt ist, und
- einem Verschlußhaken (24) an der gegenüberliegenden Seite der Öffnung zum Eingreifen in den Riegel (22) bei geschlossener Stellung des Halteteils.

9. Haltevorrichtung nach Anspruch 8, **dadurch gekennzeichnet**, daß der Verschluß ein Schnappverschluß ist, wobei der Verschlußhaken (24) - von der Rückseite (14) des Halteteils ausgehend zwischen zwei Seitenabschnitten - frei über die gesamte Höhe des Halteteils (10) verläuft.

10. Haltevorrichtung nach Anspruch 8 oder 9, **dadurch gekennzeichnet**, ein Verriegelungsbolzen im geschlossenen Zustand durch eine Bohrung (28) von einem Seitenabschnitt des vorderen Halteteils (10) durch den VerSchlußhaken (24) hindurch zum anderen Seitenabschnitt durchführbar und ggf. abschließbar ist.

11. Haltevorrichtung nach einem der Ansprüche 8 bis 10, **dadurch gekennzeichnet**, daß der Riegel (22) an seiner inneren Oberfläche über einen Vorsprung (26) verfügt, der im geschlossenen Zustand in eine entsprechende Aussparung am Vorderschaft des Gewehrs (A) eingreift und/oder federnd am Gewehr anliegt.

12. Haltevorrichtung nach einem der Ansprüche 2 bis 7, **dadurch gekennzeichnet**, daß das vordere Halteteil über einen Verschluß verfügt mit
- einem aus mindestens zwei gelenkig miteinander verbundenen Riegelteilen (87, 88) bestehenden Verschlußelement, das an einer Seite (81) einer Öffnung zur Aufnahme des Gewehrschaftes und/oder -lauf es seitlich angelenkt ist, und
- einer Ausnehmung (90, 92) an der gegenüberliegenden Seite (83) der Öffnung, in welche das eine Riegelteil (87) des Verschlußelements aufgenommen wird und durch Umlegen des anderen Riegelteils (88) versperrt werden kann.

13. Bausatz für den Zusammenbau einer Haltevorrichtung für ein Gewehr (A, B), mit:
- mehreren vorderen Halteteilen (10; 80; 100) jeweils unterschiedlicher gewehrspezifischer Parameter, welche den vorderen Gewehrabschnitt (52) umgreifen; und
- mehreren hinteren Halteteilen (70) nach Anspruch 1, jeweils unterschiedlicher gewehrspezifischer Parameter,
wobei die jeweiligen hinteren und vorderen Halteteile an einem Wandabschnitt (56; 57; 58; 59; 60) relativ zueinander in der gewünschten Orientierung montierbar sind.

14. Bausatz nach Anspruch 13, gekennzeichnet durch Zwischenstücke (55) unterschiedlicher Art zur Montage der vorderen Halteteile (10; 80; 100) im gewünschten Abstand zu dem Wandabschnitt (56; 57; 58; 59; 60).

15. Bausatz nach Anspruch 13 oder 14, **dadurch gekennzeichnet**, daß dieselben Bausteine wahlweise am Boden, an einer Wand oder einer Decke montierbar sind.

## Claims

1. Holding part for a gun for receiving the butt end of the gun (A, B) with a cup-shaped receiving part (70), **characterised in that** the receiving part (70) has a plurality of recesses (73, 74, 75, 76) and/or projections (78) on the inner surface, these being arranged, for receiving the butt end of a gun (A, B), in such a way that different types of gun can be accommodated in the holding part.

2. Holding device for a gun (A, B) for securing the gun on a section of wall, with at least one rear holding part according to Claim 1 and at least one front holding part (10; 80; 100), which reaches at least partially around the front stock (52) and/or the barrel of the gun (A).

3. Holding device according to Claim 2, **characterised in that** the front holding part (80) is also provided with a plurality of recesses and/or projections for receiving different types of gun.

4. Holding device according to Claim 3, **characterised in that** the recesses for receiving different shoulder rests in the rear holding part (70) are formed in the manner of steps on the inside of the holding part (70).

5. Holding device according to Claim 3 or 4, **characterised in that** the front holding part has an inner profile (85) with one or more adjusting elements (86, 86') which can be connected and released.

6. Holding device according to Claim 2, **characterised in that** the rear holding part (40) is designed in such a way that it surrounds the end of the gun in the manner of a cup with the shoulder rest placed against the gun.

7. Holding device according to one of Claims 2 to 6, **characterised in that** the front holding part is provided on at least two side walls and the rear holding part is provided on three side walls with holes (20; 34; 46; 79; 84) for fixing.

8. Holding device according to one of Claims 2 to 7, **characterised in that** the front holding part (10) has a fastener with
- a locking bar (22), which is pivoted laterally on one side of an opening for receiving the gun stock and/or barrel, and
- a fastener hook (24) on the opposite side of the opening for engagement in the locking bar (22) in the closed position of the holding part.

9. Holding device according to Claim 8, **characterised in that** the fastener is a snap fastener, the fastener hook (24) extending freely over the entire height of the holding part (10) between two lateral portions from the rear side (14) of the holding part.

10. Holding device according to Claim 8 or 9, **characterised in that**, in the closed state, a locking bolt can be passed through a hole (28) from one lateral portion of the front holding part (10), through the fastener hook (24), to the other lateral portion and can be locked if appropriate.

11. Holding device according to one of Claims 8 to 10, **characterised in that** the locking bar (22) has a projection (26) on its inner surface, the projection resting in a corresponding aperture in the front stock of the gun (A) and/or resting resiliently against the gun in the closed state.

12. Holding device according to one of Claims 2 to 7, **characterised in that** the front holding part has a fastener with
- a fastener element that comprises at least two locking-bar components (87, 88) connected to one another in an articulated manner and is pivoted laterally on one side (81) of an opening for receiving the gun stock and/or barrel, and
- a recess (90, 92) on the opposite side (83) of the opening, in which one locking-bar component (87) of the fastener element is received and can be locked by folding over the other locking-bar component (88).

13. Kit for the assembly of a holding device for a gun (A, B), with:
- a plurality of front holding parts (10; 80; 100), each having different parameters for specific guns, which reach around the front gun portion (52); and
- a plurality of rear holding parts (70) according to Claim 1, each having different parameters for specific guns,
it being possible to mount the respective rear and front holding parts on a wall section (56; 57; 58; 59; 60) in the desired orientation relative to one another.

14. Kit according to Claim 13, characterised by intermediate pieces (55) of different types for mounting the front holding parts (10; 80; 100) at the desired distance from the wall section (56; 57; 58; 59; 60).

15. Kit according to Claim 13 or 14, **characterised in that** the same components can be mounted on the floor, a wall or a roof.

## Revendications

1. Pièce de retenue pour un fusil, servant à loger l'extrémité arrière du fusil (A, B) et comportant une partie de réception en forme de pot (70), **caractérisée en ce que** la partie de réception (70) comporte, au niveau de sa surface intérieure, plusieurs évidements (73, 74, 75, 76) et/ou appendices saillants (78), qui sont agencés pour recevoir l'extrémité arrière d'un fusil (A, B) de telle sorte que différents types de fusils peuvent être logés dans la pièce de retenue.

2. Dispositif de retenue pour un fusil (A ; B) pour la fixation du fusil à un élément de paroi, comportant une pièce de retenue arrière selon la revendication 1 et au moins une pièce de retenue avant (10 ; 80 ; 100), qui entourent au moins partiellement le fût avant (52) et/ou le canon du fusil (A).

3. Dispositif de retenue selon la revendication 2, **caractérisé en ce que** la partie avant de retenue (80) comporte plusieurs évidements et/ou appendices saillants servant à recevoir différents types de fusil.

4. Dispositif de retenue selon la revendication 3, **caractérisé en ce que** dans la pièce de retenue arrière (70), des évidements servant à loger différentes crosses sont agencés avec une forme étagée, dans la face intérieure de la pièce de retenue (70).

5. Dispositif de retenue selon la revendication 3 ou 4, **caractérisé en ce que** la partie de retenue avant comporte un profil intérieur (85) possédant un ou plusieurs éléments de réglage (86, 86') pouvant être reliés de façon amovible.

6. Dispositif de retenue selon la revendication 2, **caractérisé en ce que** la pièce de retenue arrière (40) est agencée de telle sorte qu'elle entoure à la manière d'un pot l'extrémité du fusil lorsque ce dernier est posé sur sa crosse.

7. Dispositif de retenue selon la revendication 2 à 6, **caractérisé en ce que** la pièce de retenue avant est équipée d'au moins deux parois amère et que la pièce de retenue arrière est équipée, sur trois parois latérales, de perçages de fixation (20 ; 34 ; 46 ; 79 ; 84).

8. Dispositif de retenue selon l'une des revendications 2 à 7, **caractérisé en ce que** la pièce de retenue avant (10) dispose un système de fermeture comportant :
◆ un verrou (22), qui est articulé sur un côté d'une ouverture de manière à loger le fût du fusil et/ou le canon du fusil, et
◆ un crochet de fermeture (24) situé sur le côté opposé de l'ouverture et destiné à s'engager dans le verrou (22) dans la position fermée de la pièce de retenue.

9. Dispositif de retenue selon la revendication 8, **caractérisé en ce que** le dispositif de fermeture est un dispositif de fermeture à encliquetage, le crochet de fermeture (24) s'étendant librement sur toute la hauteur de la pièce de retenue ( 10) - à partir du côté arrière (14) de la pièce de retenue, entre deux sections latérales.

10. Dispositif de retenue selon la revendication 8 ou 9, **caractérisé en ce qu**'à l'état fermé un axe de verrouillage peut traverser un perçage (28) à partir d'une partie latérale de la pièce de retenue avant (10), à travers le crochet de fermeture (24), en direction de l'autre partie latérale et peut être éventuellement fermé.

11. Dispositif de retenue selon l'une des revendications 8 à 10, **caractérisé en ce que** le verrou (22) comporte, sur sa surface intérieure, une partie saillante (28) qui, à l'état fermé, s'engage dans un évidement correspondant formé dans le fût avant du fusil (A) et/ou s'applique élastiquement contre le fusil.

12. Dispositif de retenue selon l'une des revendications 2 à 7, **caractérisé en ce que** la pièce de retenue avant dispose d'un dispositif de fermeture comportant :
◆ un élément de fermeture qui est constitué par au moins deux éléments de verrou (87, 88) reliés entre eux de façon articulée et qui est articulé latéralement, sur un côté (81) d'une ouverture pour loger le fût et/ou le canon du fusil, et
◆ un évidement (90, 92) situé sur le côté opposé (83) de l'ouverture et dans lequel un élément de verrou (87) de l'élément de fermeture est logé et peut être bloqué par rabattement de l'autre élément de verrou (88).

13. Ensemble de construction pour l'assemblage d'un dispositif de retenue pour un fusil (A, B), comportant :
◆ plusieurs pièces de retenue avant (10 ; 80 ; 100) possédant respectivement des paramètres différents spécifiques du fusil, et qui entourent la partie avant (52) du fusil ; et
◆ plusieurs pièces de retenue arrière (70) selon la revendication 1, de paramètres respectifs différents spécifiques au fusil,
dans lequel les pièces de retenue arrière et avant respectives peuvent être montées sur un élément de paroi (56 ; 57 ; 58 ; 59 ; 60) les unes par rapport aux autres avec l'orientation désirée.

14. Ensemble de construction selon la revendication 13, caractérisé par des éléments intercalaires (55) de différents types pour le montage des pièces de retenue avant (10; 80; 100) à la distance désirée de l'élément de paroi (56 ; 57 ; 58 ; 59 ; 60).

15. Ensemble de construction selon la revendication 13 ou 14, **caractérisé en ce que** les mêmes modules peuvent être montés au choix sur le sol, sur une paroi ou à un plafond.
